# EUROPÄISCHE PATENTANMELDUNG

(11) **EP 4 643 733 A1**
(43) Veröffentlichungstag der Anmeldung: **05.11.2025**
(21) Anmeldenummer: 24173958.0
(22) Anmeldetag: 02.05.2024
(51) Int. Cl.: A47J 43/07

(54) **ZUBEREITUNGSMODUL FÜR EIN KÜCHENGERÄT, GEHÄUSE UND KÜCHENGERÄT**

(71) Anmelder: Vorwerk & Co. Interholding GmbH, 42275 Wuppertal (DE)
(72) Erfinder: Zils, Jürgen, 51399 Burscheid (DE); Kielmann, Philipp, 40878 Ratingen (DE); Dreitz, Andreas, 96247 Michelau (DE); Seydel, Leon, 42115 Wuppertal (DE)
(74) Vertreter: Dr. Solf & Zapf Patent- und Rechtsanwalts PartG mbB

(57) **Zusammenfassung**

Die vorliegende Erfindung betrifft Zubereitungsmodul (1) zum Anordnen in einem Aufnahmebereich (2) einer Küchengerätebasis (3) eines Küchengeräts (4), wobei das Zubereitungsmodul (1) mindestens ein Zubereitungsgefäß (5) und mindestens eine elektrische Schnittstelle (7) aufweist.

Das erfindungsgemäße Zubereitungsmodul (1) ist gekennzeichnet durch ein Zubereitungsgefäß (5) mit mindestens einem Innentopf (8) und mindestens einem Gehäuse (10). Der Innentopf (8) ist zumindest teilweise in dem Gehäuse (10) anordenbar und mit dem Gehäuse (10) lösbar verriegelbar.

## Beschreibung

Die Erfindung betrifft ein Zubereitungsmodul zum Anordnen in einem Aufnahmebereich einer Küchengerätebasis eines Küchengeräts, wobei das Zubereitungsmodul mindestens ein Zubereitungsgefäß und mindestens eine elektrische Schnittstelle aufweist.

Küchengeräte mit Küchengerätebasis und Zubereitungsmodul, beispielsweise umfassend ein Zubereitungsgefäß und mindestens einen Deckel, sind im Stand der Technik in einer Vielzahl von Ausgestaltungen bekannt. Derartige Küchengeräte dienen dem automatischen, teilautomatischen oder manuellen Zubereiten, z. B. Zerkleinern, Mahlen, Pressen, Rühren, Garen, Dampfgaren und/oder Warmhalten, insbesondere von Speisen. Das Küchengerät weist üblicherweise eine Küchengerätebasis auf, die mindestens einen Aufnahmebereich für mindestens ein Zubereitungsmodul, z. B. mit einem Zubereitungsgefäß, bereitstellt. Der Aufnahmebereich weist häufig mindestens eine elektrische Gegenschnittstelle auf, um ein in dem Aufnahmebereich angeordnetes Zubereitungsmodul mit mindestens einer Arbeitsspannung zu versorgen, beispielsweise für eine Heizeinrichtung des Zubereitungsmoduls, oder um beispielsweise Sensoren zu kontaktieren.

Alternativ oder zusätzlich ist im Aufnahmebereich mindestens eine mechanische Schnittstelle, z. B. eine Werkzeugschnittstelle, vorgesehen, die beispielsweise der Übertragung eines Drehmoments von einer Arbeitseinheit, z. B. eines Motors, der Küchengerätebasis beispielsweise auf ein an dem Zubereitungsmodul angeordnetes Werkzeug dient.

Die aus dem Stand der Technik bekannten Zubereitungsgefäße sind üblicherweise aus rostfreiem Stahl hergestellt, so dass sie auf einfache Weise gereinigt werden können. Insbesondere bei der Zubereitung von heißen Speisen erwärmt sich die äußere Oberfläche derartiger Zubereitungsgefäße auf die Zubereitungstemperatur, wodurch der Benutzer den Zubereitungstopf nur noch an einem dafür vorgesehenen Handgriff halten kann.

Ausgehend von diesem Stand der Technik liegt der Erfindung die Aufgabe zugrunde, ein Zubereitungsmodul anzugeben, das auf einfache Weise zu reinigen ist und bei dem die Benutzersicherheit gesteigert ist.

Die vorgenannte Aufgabe ist bei einem gattungsgemäßen Zubereitungsmodul mit dem Merkmalsinhalt des Kennzeichnungsteils des Anspruchs 1 gelöst, nämlich dadurch, dass mindestens ein Innentopf und mindestens ein Gehäuse vorhanden ist. Der Innentopf ist zumindest teilweise, insbesondere vollständig, in dem Gehäuse anordenbar und in dem Gehäuse lösbar verriegelbar. In dem Innentopf ist beispielsweise ein Zubereitungsraum ausgebildet.

Das Zubereitungsmodul umfasst zumindest ein Zubereitungsgefäß. Ein Deckel zum Verschließen des Zubereitungsgefäßes ist optional. Das Zubereitungsgefäß des Zubereitungsmoduls ist zum Anordnen in einem Aufnahmebereich einer Küchengerätebasis eines Küchengerätes ausgebildet und eingerichtet. Das Zubereitungsmodul dient - bei Verwendung mit einer Küchengerätebasis - dem automatischen, teilautomatischen oder manuellen Zubereiten, z. B. Zerkleinern, Mahlen, Pressen, Rühren, Garen, Dampfgaren und/oder Warmhalten, insbesondere von Speisen. Das Zubereitungsgefäß weist insbesondere mindestens ein elektrisches Heizmittel zum Erwärmen des Innentopfs, insbesondere des Zubereitungsraums, auf. Ferner weist das Zubereitungsgefäß mindestens eine elektrische Schnittstelle, beispielsweise für die Kontaktierung des Heizmittels und/oder zur Kontaktierung von Sensoren, auf. Die elektrische Schnittstelle umfasst insbesondere mindestens fünf Kontaktstifte. Die elektrische Schnittstelle ist insbesondere zum Zusammenwirken mit einer elektrischen Gegenschnittstelle der Küchengerätebasis ausgebildet.

Vorzugsweise ist vorgesehen, dass die elektrische Schnittstelle für das Zubereitungsgefäß, beispielsweise zur Kontaktierung der Heizeinrichtung oder von Sensoren, am Innentopf angeordnet ist. Wird der Innentopf aus dem Gehäuse entnommen, wird auch die elektrische Schnittstelle entnommen. Beispielsweise ist vorgesehen, dass die Heizeinrichtung jedenfalls am Innentopf befestigt und mit dem Innentopf entnehmbar ist.

Es ist insbesondere vorgesehen, dass mindestens ein Werkzeug oder mindestens ein Werkzeughalter fest mit dem Innentopf verbunden ist, wobei mit dem Werkzeughalter ein Werkzeug lösbar verbindbar ist. Alternativ dazu ist bevorzugt vorgesehen, dass der Innentopf ein entnehmbares Werkzeug oder einen entnehmbaren Werkzeughalter aufweist, das bzw. der lösbar mit dem Zubereitungsgefäß verbunden ist. Mit dem Werkzeughalter ist ein Werkzeug lösbar verbindbar. Das Werkzeug ist beispielsweise zum Rühren, Schneiden und/oder Zerkleinern von Speisen ausgebildet.

Ferner weist das Zubereitungsmodul, insbesondere das Zubereitungsgefäß, vorzugsweise mindestens eine mechanische Schnittstelle, beispielsweise für die Übertragung eines Drehmoments, für ein Werkzeug auf, die zum Zusammenwirken mit einer mechanischen Gegenschnittstelle der Küchengerätebasis, insbesondere einer Werkzeugschnittstelle, ausgebildet ist. Vorzugsweise ist das Werkzeug bzw. der Werkzeughalter mit der mechanischen Schnittstelle gekoppelt.

Der Zubereitungsraum des Zubereitungsgefäßes ist z. B. mit einem Deckel verschließbar, wobei der Deckel insbesondere unter Verwendung eines Deckelverriegelungselements verriegelbar ist. Vorteilhaft ist zwischen Deckel und Zubereitungsgefäß mindestens eine Dichtung angeordnet. Vorzugsweise ist die Dichtung zum Zentrieren des Deckels beim Auflegen ausgebildet. Beispielsweise ist die Dichtung durch einen verschweißten Haltering am Deckel gehalten.

Das Zubereitungsgefäß weist vorzugsweise mindestens einen Handgriff zum Transport auf. Der Handgriff ist insbesondere im Wesentlichen senkrecht oder waagerecht orientiert und ist auf einer Außenseite des Gehäuses des Zubereitungsmoduls angeordnet. Es ist insbesondere auch vorgesehen, dass ein erster Handgriff senkrecht und ein zweiter Handgriff waagerecht orientiert ist. Beispielsweise ist zumindest ein Teil des Handgriffs einstückig mit dem Gehäuse ausgebildet. Insbesondere ist der Handgriff von einem lösbaren Abdeckelement abgedeckt. Alternativ dazu ist vorgesehen, dass der Handgriff am Innentopf angeordnet ist. In diesem Fall weist das Gehäuse vorzugsweise eine Aussparung auf, in die der Griff eintreten kann, wenn der Innentopf in das Gehäuse eingesetzt wird.

Der Innentopf ist zumindest teilweise, insbesondere vollständig, in das Gehäuse einbringbar. Vorzugsweise umschließt das Gehäuse den Innentopf umfänglich zumindest teilweise, insbesondere vollständig. Ferner ist vorgesehen, dass der Innentopf auch in Bezug auf seine Höhe vollständig von dem Gehäuse umgeben ist. Beispielsweise ist der Innentopf mittels mindestens einer, insbesondere rotierbaren, Verriegelungseinheit mit dem Gehäuse verriegelbar. Alternativ dazu ist das Gehäuse mit dem Innentopf durch eine Relativbewegung, vorzugsweise durch eine Rotation, zumindest eines Teils des Gehäuses relativ zum Innentopf, verriegelbar. Insbesondere ist vorgesehen, dass das Gehäuse relativ zum Innentopf rotiert wird, um das Gehäuse mit dem Innentopf zu verriegeln.

Gemäß einer Ausgestaltung des Zubereitungsmoduls hat sich als vorteilhaft herausgestellt, wenn vorgesehen ist, dass der Innentopf aus einem Metall, insbesondere aus einem rostfreien Stahl, hergestellt ist. Vorzugsweise ist das Gehäuse zumindest teilweise, insbesondere vollständig, aus einem thermisch schlecht leitenden Material bzw. aus einem thermisch isolierenden Material, beispielsweise Kunststoff, ausgebildet. Es ist alternativ dazu insbesondere vorgesehen, dass das Gehäuse zumindest teilweise aus einem Metall ausgebildet ist, und dass zwischen Innentopf und Gehäuse ein Luftspalt ausgebildet ist. Der Luftspalt dient dann der thermischen Isolierung.

Beispielsweise ist vorgesehen, dass das Gehäuse zumindest teilweise aus Metall und zumindest teilweise aus einem thermisch isolierenden Material ausgebildet ist. Insbesondere sind die Materialien derart angeordnet, dass eine Temperatur des Innentopfes in möglichst geringem Umfang zu einer äußeren Oberfläche des Gehäuses bzw. zu der Hülle übertragen wird. Ferner ist vorgesehen, dass das Gehäuse unterschiedliche Kunststoffe, insbesondere Kunststoffe mit unterschiedlichen thermischen und/oder mechanischen Eigenschaften, aufweist.

Die Erfindung weist gegenüber dem Stand der Technik den Vorteil auf, dass insbesondere der Innentopf auf einfache Weise reinigbar ist. Das Gehäuse, das den Innentopf im montierten Zustand umgibt, gewährleistet einen Berührschutz für den Innentopf, der sich bei der Verwendung auf eine Zubereitungstemperatur erwärmen kann.

Eine erste Ausgestaltung des Zubereitungsmoduls sieht vor, dass mindestens eine Verriegelungseinheit vorhanden ist, mit der zumindest der in dem Gehäuse angeordnete Innentopf lösbar verriegelbar ist. Der Innentopf wirkt mit der Verriegelungseinheit beispielsweise formschlüssig zusammen, wenn er im Gehäuse verriegelt ist. Vorzugsweise ist zumindest ein Teil der Verriegelungseinheit zumindest zwischen einer Freigabeposition und einer Verriegelungsposition bewegbar, insbesondere rotierbar, um den Innentopf am Gehäuse zu verriegeln bzw. von diesem zu lösen. In der Verriegelungsposition ist der Innentopf mit der Verriegelungseinheit im Gehäuse, beispielsweise formschlüssig, verriegelt. In der Freigabeposition ist der Innentopf aus dem Gehäuse entnehmbar und in dieses einbringbar. Vorzugsweise ist die Verriegelungseinheit im Montagezustand unterhalb des Innentopfes im Gehäuse angeordnet. Beispielsweise wird zumindest ein Teil der Verriegelungseinheit um einen Winkel von etwa 10° bis 40° rotiert, um den Werkzeughalter im Innentopf zu verriegeln. Ein Rotieren der Verriegelungseinheit erfolgt insbesondere um eine Rotationsachse R, die z. B. mit einer Längsachse des Zubereitungsgefäßes und/oder einer Rotationsachse R1 einer mechanischen Gegenschnittstelle für ein Werkzeug der Küchengerätebasis zusammenfällt.

Der Benutzerkomfort lässt sich gemäß einer weiteren Ausgestaltung des Zubereitungsgefäßes vorteilhaft dadurch steigern, dass mindestens ein Betätigungsgriff vorhanden ist, und dass die Verriegelungseinheit mit dem Betätigungsgriff durch einen Benutzer bewegbar, insbesondere rotierbar, ist. Insbesondere ist der Innentopf mit dem Betätigungsgriff ver- und entriegelbar. Der Betätigungsgriff ist mit der Verriegelungseinheit, z. B. einstückig, verbunden und erstreckt sich bevorzugt bis auf eine Außenseite des Gehäuses. Beispielsweise ist der Betätigungsgriff auf einer Außenseite des Gehäuses verschiebbar bzw. rotierbar gehalten. Auf diese Weise kann der Betätigungsgriff einfach durch einen Benutzer gegriffen und betätigt werden. Besonders bevorzugt ist der Betätigungsgriff auf einer Umfangsfläche des Gehäuses angeordnet. Alternativ oder zusätzlich dazu ist vorgesehen, dass ein Betätigungsgriff an einer Unterseite des Zubereitungsgefäßes zugänglich ist, z. B. verschiebbar oder rotierbar ist.

Gemäß einer vorteilhaften Ausgestaltung des Zubereitungsmoduls ist vorgesehen, dass die Verriegelungseinheit mindestens einen Verriegelungsring aufweist. Der Verriegelungsring ist vorzugsweise rotierbar an dem Gehäuse, insbesondere in einem unteren Bodenbereich des Gehäuses, gelagert. Die Rotation erfolgt um eine Rotationsachse R. Beispielsweise weist das Gehäuse eine Mehrzahl an Führungsnuten auf, in denen der Verriegelungsring bewegbar, insbesondere rotierbar, gelagert ist. Die Verriegelungsposition und die Freigabeposition des Verriegelungsrings werden beispielsweise durch Anschläge realisiert. Beispielsweise ist der Verriegelungsring aus einem derartigen Material ausgebildet, dass der Verriegelungsring bei der Montage elastisch verformbar und während der elastischen Verformung in die Führungsnuten einsetzbar ist.

Um insbesondere das Zusammenwirken zwischen Gehäuse und Innentopf zu verbessern, ist gemäß einer Ausgestaltung des Zubereitungsmoduls vorgesehen, dass die Verriegelungseinheit mindestens einen Topfriegel aufweist, und dass der Topfriegel zum formschlüssigen Zusammenwirken mit dem Innentopf zumindest in der Verriegelungsposition ausgebildet ist. Bevorzugt ist mindestens oder genau ein Topfriegel, mindestens oder genau zwei Topfriegel, mindestens oder genau drei Topfriegel, mindestens oder genau vier Topfriegel oder mindestens oder genau fünf Topfriegel an der Verriegelungseinheit vorgesehen, insbesondere an dem Verriegelungsring ausgebildet. Der Topfriegel wird zusammen mit der Verriegelungseinheit vorzugsweise zwischen der Verriegelungsposition und der Freigabeposition rotiert, um den Innentopf lösbar in dem Gehäuse zu verriegeln. Jeder Topfriegel wirkt vorzugsweise in der Verriegelungsposition formschlüssig mit einem nachfolgend beschriebenen Gegenriegelelement des Innentopfes zusammen. Jeder Topfriegel ist vorzugsweise derart ausgebildet, dass er in der Verriegelungsposition derart formschlüssig mit dem Innentopf zusammenwirkt, dass zumindest Kräfte parallel zu einer Längsachse des Zubereitungsmoduls, insbesondere parallel zu einer Rotationsachse der Verriegelungseinheit und/oder eines Werkzeugs des Zubereitungsmoduls, übertragbar sind. Beispielsweise ist der Topfriegel an einem Verriegelungsring der Verriegelungseinheit ausgebildet und steht in radialer Richtung nach außen an dem Verriegelungsring hervor.

Besonders bevorzugt weist ein Topfriegel gemäß einer bevorzugten Ausgestaltung mindestens einen oberen Riegelabschnitt und mindestens einen unteren Riegelabschnitt auf. Zwischen dem oberen Riegelabschnitt und dem unteren Riegelabschnitt ist vorzugsweise eine Nut ausgebildet. Der obere Riegelabschnitt und der untere Riegelabschnitt erstrecken sich vorzugsweise parallel zueinander. Der untere Riegelabschnitt ist vorzugsweise näher in Richtung einer Unterseite des Gehäuses angeordnet als der obere Riegelabschnitt.

Der obere Riegelabschnitt steht von der Verriegelungseinheit, insbesondere dem Verriegelungsring, in radialer Richtung nach außen weiter von der Verriegelungseinheit hervor als der untere Riegelabschnitt. Dadurch ist gewährleistet, dass der Innentopf nicht in das Gehäuse einsetzbar bzw. nicht mit dem Gehäuse verriegelbar ist, wenn sich die Verriegelungseinheit bereits in der Verriegelungsposition befindet. Vorzugsweise kollidiert dann ein Teil des Innentopfes, insbesondere ein Gegenriegelelement, mit einer Oberfläche des oberen Riegelabschnitts. Dadurch wird insbesondere eine Fehlbedienung verhindert. In der Verriegelungsposition wird der Innentopf, insbesondere ein Gegenriegelelement des Innentopfes, vorzugsweise oberseitig von dem oberen Riegelabschnitt und unterseitig von dem unteren Riegelabschnitt umgriffen. Das Gegenriegelelement befindet sich in der Verriegelungsposition zumindest teilweise in der Nut zwischen oberem Riegelabschnitt und unterem Riegelabschnitt.

Wenn eine Mehrzahl von Topfriegeln an der Verriegelungseinheit, insbesondere an dem Verriegelungsring, ausgebildet sind, sind diese vorzugsweise auf einem Umfang gleichmäßig zueinander beabstandet angeordnet. Eine Höhe des Topfriegels entspricht vorzugsweise in etwa einer Höhe des Verriegelungsrings.

Als besonders vorteilhaft hat sich gemäß einer weiteren Ausgestaltung des Zubereitungsmoduls herausgestellt, wenn vorgesehen ist, dass der Innentopf mindestens ein Gegenriegelelement zum formschlüssigen Zusammenwirken mit dem Topfriegel in der Verriegelungsposition der Verriegelungseinheit aufweist. Insbesondere ist das Gegenriegelelement im Wesentlichen hakenförmig ausgebildet. Bei einem Bewegen der Verriegelungseinheit, insbesondere bei einem Rotieren des Verriegelungsrings, wird zumindest der Topfriegel so verschwenkt, dass er in der Verriegelungsposition formschlüssig mit dem Gegenriegelelement zusammenwirkt und dadurch den Innentopf innerhalb des Gehäuses verriegelt.

Besonders bevorzugt ist vorgesehen, dass mindestens oder genau ein Gegenriegelelement, mindestens oder genau zwei Gegenriegelelemente, mindestens oder genau drei Gegenriegelelemente, mindestens oder genau vier Gegenriegelelemente oder mindestens oder genau fünf Gegenriegelelemente an dem Innentopf ausgebildet sind. Vorzugsweise entspricht die Anzahl der Gegenriegelelemente der Anzahl an Topfriegeln der Verriegelungseinheit. Eine Mehrzahl an Gegenriegelelementen sind - wie auch die Topfriegel - gleichmäßig über den Umfang des Innentopfes an einer Unterseite des Innentopfes verteilt angeordnet.

Besonders bevorzugt ist das Gegenriegelelement an einem Topffuß des Innentopfes ausgebildet. Beispielsweise ist der Topffuß aus einem Kunststoff hergestellt.

Vorzugsweise steht das Gegenriegelelement bzw. stehen die Gegenriegelelemente von einer Unterseite des Topffußes hervor.

Um die Verriegelungseinheit vorteilhaft in der Verriegelungsposition bzw. der Freigabeposition zu fixieren, ist gemäß einer weiteren Ausgestaltung des Zubereitungsmoduls vorgesehen, dass die Verriegelungseinheit mindestens eine Rasteinheit aufweist. Die Rasteinheit wirkt vorzugsweise zwischen der Verriegelungseinheit, insbesondere einem Verriegelungsring, und dem Gehäuse. Die Verriegelungseinheit ist mit der Rasteinheit kraftformschlüssig zumindest in der Freigabeposition und/oder in der Verriegelungsposition festlegbar. Kraftformschluss bedeutet in diesem Zusammenhang, dass es sich um eine formschlüssige Verbindung handelt, die jedoch auflösbar ist, wenn eine ausreichend hohe Kraft aufgebracht wird.

Besonders bevorzugt ist vorgesehen, dass die Rasteinheit mindestens eine Rastnocke und mindestens zwei Rastrücksprünge zum Zusammenwirken mit der Rastnocke aufweist. Die Rastrücksprünge sind vorzugsweise derart angeordnet, dass die Rastnocke dann mit einem jeweiligen Rastrücksprung zusammenwirkt, wenn sich die Verriegelungseinheit in der Freigabeposition bzw. in der Verriegelungsposition befindet. Besonders bevorzugt ist vorgesehen, dass die Rastnocke entgegen einer Federkraft ausweichen kann, so dass ein Kraftformschluss zwischen der Rastnocke und den Rastrücksprüngen ausgebildet ist. Zur Realisierung des Kraftformschlusses weisen die Rastnocke und die Rastrücksprünge vorzugsweise korrespondierende Führungsflächen auf.

Beispielsweise ist vorgesehen, dass die Rastnocke an einem zumindest teilweise gewölbten Federelement ausgebildet ist. Insbesondere ist die Rastnocke an einem im Wesentlichen B-förmig gewölbten Federelement an der Rasteinheit ausgebildet. Vorzugsweise ist das Federelement einstückig mit der Verriegelungseinheit, insbesondere dem Verriegelungsring der Verriegelungseinheit, ausgebildet. Die Rastrücksprünge sind z. B. an einem auf einer Innenseite des Verriegelungsrings hervorstehenden Steg des Gehäuses ausgebildet, so dass die Rastrücksprünge mit der vorzugsweise radial nach innen gerichteten Rastnocke des Verriegelungsrings zusammenwirken können.

Die Verriegelungseinheit weist gemäß einer weiteren Ausgestaltung mindestens einen Gehäuseriegel auf, der zum formschlüssigen Zusammenwirken mit dem Gehäuse zumindest in der Verriegelungsposition ausgebildet ist. Vorzugsweise ist der Gehäuseriegel an einem Verriegelungsring der Verriegelungseinheit ausgebildet und erstreckt sich in radialer Richtung nach außen von dem Verriegelungsring weg. Besonders bevorzugt sind mindestens oder genau ein, mindestens oder genau zwei, mindestens oder genau drei, mindestens oder genau vier, mindestens oder genau fünf Gehäuseriegel vorgesehen. Sind eine Mehrzahl von Gehäuseriegeln vorgesehen, sind diese insbesondere auf einem Umfang gleichmäßig verteilt zueinander angeordnet. Der Gehäuseriegel ist bevorzugt neben einem Topfriegel angeordnet, insbesondere ist neben jedem Topfriegel ein Gehäuseriegel angeordnet. Der Gehäuseriegel ist zumindest in der Verriegelungsposition der Verriegelungseinheit in eine an dem Innentopf, insbesondere an einem Topffuß, ausgebildete Führungsnut hineingeschwenkt, so dass eine Kraft in einer Richtung parallel zu einer Längsachse des Zubereitungsmoduls bzw. zu einer Rotationsachse der Verriegelungseinheit und/oder eines Werkzeugs des Zubereitungsmoduls von der Verriegelungseinheit, insbesondere dem Verriegelungsring, auf das Gehäuse übertragen werden kann. Die Verriegelungseinheit gewährleistet somit, dass die Verriegelungseinheit selbst mit dem Gehäuse verriegelt ist und gleichzeitig der Innentopf über die Verriegelungseinheit mit dem Gehäuse verriegelt ist.

Insbesondere um ein Aufbringen des Zubereitungsmoduls in einen Aufnahmebereich einer Küchengerätebasis zu verhindern, wenn der Innentopf nicht vollständig mit dem Gehäuse verriegelt ist, weist die Verriegelungseinheit gemäß einer weiteren Ausgestaltung des Zubereitungsmoduls mindestens ein Sperrelement auf. Das Gehäuse weist, insbesondere an einer Unterseite, mindestens eine Ausnehmung auf, in die eine Betätigungseinheit einer Küchengerätebasis zumindest teilweise hineinragt, wenn das Zubereitungsmodul an der Küchengerätebasis angeordnet ist. Das Sperrelement ist derart ausgebildet, dass es in diese Ausnehmung hineinragt. Das Sperrelement ist mit der Verriegelungseinheit bewegbar, insbesondere rotierbar, so dass dadurch gewährleistet werden kann, dass das Zubereitungsmodul nur dann in dem Aufnahmebereich anordenbar ist, wenn sich die Verriegelungseinheit und damit das Sperrelement in der Verriegelungsposition befindet. In der Verriegelungsposition kann das Sperrelement an der Betätigungseinheit, insbesondere einem Einführelement der Betätigungseinheit, vorbeitreten. Besonders bevorzugt ist vorgesehen, dass das Sperrelement an einem Verriegelungsring der Verriegelungseinheit ausgebildet ist und radial nach innen in den Verriegelungsring hervorsteht. Das Sperrelement ist im Wesentlichen flach ausgebildet und weist insbesondere eine Höhe auf, die etwa einem Viertel bis der Hälfte einer Höhe des Verriegelungsrings entspricht.

Das Sperrelement dient, wie nachfolgend beschrieben werden wird, ferner dazu, ein Verbringen der Verriegelungseinheit in die Freigabeposition zu verhindern, wenn das Zubereitungsmodul auf einer Küchengerätebasis angeordnet wird, insbesondere indem das Sperrelement formschlüssig mit einer Betätigungseinheit der Küchengerätebasis, bevorzugt einem Halteelement, zusammenwirkt, so dass eine Rotation der Verriegelungseinheit verhindert wird.

Das Risiko für eine Fehlbedienung des Zubereitungsmoduls durch einen Benutzer lässt sich gemäß einer weiteren Ausgestaltung dadurch reduzieren, dass die Verriegelungseinheit mindestens einen Sperrhebelschieber aufweist, und dass der Sperrhebelschieber zum Zusammenwirken mit einem am Innentopf ausgebildeten Sperrhebel ausgebildet ist. Der Sperrhebelschieber wirkt insbesondere mit dem Sperrhebel des Innentopfes zusammen, wenn sich die Verriegelungseinheit in der Verriegelungsposition befindet. Besonders bevorzugt ist vorgesehen, dass der Sperrhebelschieber an einem Verriegelungsring der Verriegelungseinheit ausgebildet ist. Insbesondere ist der Sperrhebelschieber derart an dem Verriegelungsring ausgebildet, dass er sich im Wesentlichen zumindest teilweise radial nach außen erstreckt und nach oben von dem Verriegelungsring hervorsteht.

Der Sperrhebel ist vorzugsweise bewegbar gelagert und an dem Innentopf, insbesondere an einem Topffuß des Innentopfes, angeordnet. Vorzugsweise ist der Sperrhebel zwischen einer Sperrposition und einer Neutralposition rotierbar. Der Sperrhebel weist zudem mindestens ein Rückstellelement, beispielsweise in Form einer Feder, auf, das den Sperrhebel stets in die Sperrposition drängt. In der Sperrposition ragt der Sperrhebel in die Ausnehmung hinein, die zur zumindest teilweisen Aufnahme einer Betätigungseinheit der Küchengerätebasis an dem Zubereitungsmodul ausgebildet ist. Dadurch verhindert der Sperrhebel, dass das Zubereitungsmodul auf eine Küchengerätebasis aufbringbar ist, wenn sich der Sperrhebel in der Sperrposition befindet. Vorteilhaft ist der Sperrhebel von der Verriegelungseinheit betätigbar, insbesondere mittels des Sperrhebelschiebers. Bevorzugt ist der Sperrhebel mittels der Verriegelungseinheit in eine Neutralposition verbringbar, wenn sich die Verriegelungseinheit in Richtung der Verriegelungsposition bewegt. Dadurch betätigt der Sperrhebelschieber den Sperrhebel und rotiert diesen in eine Neutralposition. In der Neutralposition ragt der Sperrhebel nicht mehr in die Ausnehmung hinein, so dass dadurch sichergestellt ist, dass das Zubereitungsmodul nur dann auf einer Küchengerätebasis anordenbar ist, wenn die Verriegelungseinheit in der Verriegelungsposition ist.

Vorzugsweise ist vorgesehen, dass der Sperrhebel in der Sperrposition die elektrische Schnittstelle des Innentopfes blockiert. Besonders bevorzugt verhindert der Sperrhebel in der Sperrposition die Kontaktierung der elektrischen Schnittstelle des Zubereitungsmoduls durch die elektrische Gegenschnittstelle der Küchengerätebasis, insbesondere indem der Sperrhebel in der Sperrposition die elektrische Schnittstelle des Innentopfes zumindest teilweise überragt. Dadurch ist der Sperrhebel in der Sperrposition zwischen der elektrischen Schnittstelle und der elektrischen Gegenschnittstelle der Küchengerätebasis angeordnet und verhindert eine Kontaktierung.

Eine weitere Ausgestaltung des Zubereitungsmoduls sieht vor, dass die Verriegelungseinheit mindestens ein thermisch aktiviertes Sicherheitselement aufweist, und dass das Sicherheitselement eine Bewegung der Verriegelungseinheit blockiert, insbesondere eine Rotation des Verriegelungsrings blockiert, solange eine Temperatur des Innentopfes einen Schwellenwert überschreitet. Beispielsweise ist das Sicherheitselement aus einem sich unter Wärmeeinwirkung des Innentopfes verformenden Material ausgebildet. Das Sicherheitselement ist dann beispielsweise so lange in einer Form, die eine Bewegung der Verriegelungseinheit blockiert, bis die Temperatur des Innentopfes unter einen Schwellenwert, beispielsweise 30 °C, gesunken ist. Als geeignete Materialien für das Sicherheitselement haben sich beispielsweise Bimetalle herausgestellt.

Die Erfindung betrifft ferner ein Gehäuse für ein Zubereitungsmodul, insbesondere nach einem der beschriebenen Ausführungsbeispiele. Das Gehäuse ist beispielsweise mit den Merkmalen eines Gehäuses eines der beschriebenen Ausführungsbeispiele ausgebildet. In dem Gehäuse ist mindestens eine Verriegelungseinheit mit mindestens einem Verriegelungsring angeordnet. Der Verriegelungsring ist relativ zum Gehäuse zwischen einer Freigabeposition und einer Verriegelungsposition bewegbar, insbesondere rotierbar. Der Verriegelungsring ist insbesondere formschlüssig in dem Gehäuse gehalten. Der Verriegelungsring weist mindestens einen Gehäuseriegel und mindestens einen Topfriegel auf, wobei sich der Topfriegel und der Gehäuseriegel insbesondere radial von dem Verriegelungsring nach außen erstrecken. Ferner weist der Verriegelungsring mindestens ein Sperrelement auf, wobei sich das Sperrelement insbesondere radial nach innen erstreckt.

Die Erfindung betrifft ferner ein Küchengerät, das mindestens eine Küchengerätebasis und mindestens ein Zubereitungsmodul nach einem der beschriebenen Ausführungsbeispiele aufweist. Die Küchengerätebasis weist mindestens einen Aufnahmebereich und mindestens eine Betätigungseinheit auf, die im Aufnahmebereich angeordnet ist.

Die Betätigungseinheit der Küchengerätebasis weist mindestens eine Antriebseinheit zumindest zur Bewegung eines Betätigungselements der Betätigungseinheit auf. Die Antriebseinheit ist bzw. die Bauteile der Antriebseinheit sind vorzugsweise zumindest teilweise unterhalb einer Oberseite der Küchengerätebasis, insbesondere unterhalb einer Abdeckung, angeordnet. Insbesondere ragt ein Betätigungselement der Betätigungseinheit unter die Abdeckung, um mit der Antriebseinheit zusammenzuwirken.

Die Betätigungseinheit weist mindestens das um eine Rotationsachse rotierbar gehaltene Betätigungselement und mindestens ein ortsfestes Halteelement auf. Das ortsfeste Halteelement ist relativ zu einer Oberseite der Küchengerätebasis ortsfest, während das rotierbar gehaltene Betätigungselement relativ zu der Oberseite der Küchengerätebasis bzw. des Aufnahmebereiches bewegbar ist. Das Betätigungselement ist zumindest mittelbar mittels der Antriebseinheit zumindest zwischen einer ersten Position und einer zweiten Position rotierbar. Beispielsweise handelt es sich bei der ersten Position um eine Freigabeposition, in der das Zubereitungsmodul in den Aufnahmebereich einbringbar und aus diesem entnehmbar ist, und bei der zweiten Position um eine Verriegelungsposition, in der das Zubereitungsmodul mit der Küchengerätebasis, insbesondere im Aufnahmebereich, verriegelt ist. Vorzugsweise sind zusätzlich zur ersten Position und zur zweiten Position weitere Positionen vorgesehen, die mit Zusatzfunktionen verknüpft sind, beispielsweise über eine Deckelverriegelungseinheit bzw. ein Deckelverriegelungselement.

Das Betätigungselement weist mindestens ein Mitnehmerelement auf, mit dem ein an dem Zubereitungsmodul ausgebildetes Gegenelement bewegbar, insbesondere rotierbar, ist. Das Mitnehmerelement wirkt bei einer Bewegung vorzugsweise formschlüssig mit einem Gegenelement des Zubereitungsmoduls zusammen, so dass das Mitnehmerelement das Gegenelement bewegt. Das Gegenelement wirkt in der zweiten Position vorzugsweise formschlüssig mit einem Halteelement der Betätigungseinheit zusammen, um das Zubereitungsmodul in dem Aufnahmebereich zu verriegeln.

Das Zubereitungsmodul ist in dem Aufnahmebereich der Küchengerätebasis anordenbar, um mit der Küchengerätebasis zusammenzuwirken. Insbesondere dringt die Betätigungseinheit zumindest teilweise in eine Ausnehmung an dem Zubereitungsmodul ein, wenn das Zubereitungsmodul in dem Aufnahmebereich angeordnet ist. Vorzugsweise wird eine elektrische Gegenschnittstelle der Küchengerätebasis im Aufnahmebereich mit der elektrischen Schnittstelle des Zubereitungsmoduls kontaktiert, wenn das Zubereitungsmodul in dem Aufnahmebereich angeordnet wird. Sofern vorhanden, wird auch eine mechanische Gegenschnittstelle - eine Werkzeugschnittstelle - im Aufnahmebereich mit einer entsprechenden mechanischen Schnittstelle des Zubereitungsmoduls - des Werkzeughalters oder des Werkzeugs - verbunden.

Besonders bevorzugt ist das Zubereitungsmodul derart ausgebildet, dass es nicht im Aufnahmebereich anordenbar ist, wenn sich die Verriegelungseinheit in der Freigabeposition befindet. Bevorzugt ist dazu mindestens ein Sperrelement an der Verriegelungseinheit ausgebildet, insbesondere an einem Verriegelungsring der Verriegelungseinheit, wobei das Sperrelement beim Einbringen in den Aufnahmebereich mit der Betätigungseinheit der Küchengerätebasis, beispielsweise einem Einführelement der Betätigungseinheit, kollidiert, wenn sich die Verriegelungseinheit in der Freigabeposition befindet.

Alternativ oder zusätzlich dazu ist vorgesehen, dass das Sperrelement ein Verbringen der Verriegelungseinheit in die Freigabeposition verhindert, wenn das Zubereitungsmodul in dem Aufnahmebereich angeordnet ist und sich die Verriegelungseinheit in der Verriegelungsposition befindet. Vorzugsweise wirkt das Sperrelement dazu formschlüssig mit der Betätigungseinheit der Küchengerätebasis, insbesondere einem Halteelement der Betätigungseinheit, zusammen, wobei dieses Zusammenwirken vorteilhaft ein Rotieren der Verriegelungseinheit, insbesondere des Verriegelungsrings, verhindert, indem das Sperrelement an der Betätigungseinheit anliegt.

Zudem betrifft die Erfindung ein Verfahren zum Ver- und Entriegeln eines Innentopfes in einem Gehäuse eines Zubereitungsgefäßes eines Zubereitungsmoduls für ein Küchengerät, insbesondere mit den Merkmalen eines der beschriebenen Ausführungsbeispiele, vorzugsweise nach einem der Ansprüche 1 bis 12. Das Verfahren weist zumindest die folgenden Verfahrensschritte auf:
- Einbringen des Innentopfes in das Gehäuse,
- Rotieren, insbesondere manuelles Rotieren durch einen Benutzer, einer Verriegelungseinheit relativ zum Gehäuse und zum Innentopf zwischen einer Verriegelungsposition und einer Freigabeposition, um den Innentopf in dem Gehäuse zu ver- und entriegeln.

Im verriegelten Zustand wirkt die Verriegelungseinheit formschlüssig mit dem Innentopf zusammen. Die Verriegelungseinheit ist in dem Gehäuse rotierbar gehalten. Vorzugsweise umfasst das Verfahren nach dem Einbringen des Innentopfes ferner das Einbringen eines Werkzeughalters in den Innentopf, wobei der Werkzeughalter den Innentopf teilweise durchtritt, und wobei das formschlüssige Zusammenwirken der Verriegelungseinheit im verriegelten Zustand mit dem Werkzeughalter erfolgt. Der Innentopf wird dadurch indirekt gehalten.

Weitere Ausgestaltungen der funktionalen und strukturellen Merkmale des Verfahrens ergeben sich aus der Beschreibung der Ausführungsbeispiele des Zubereitungsgefäßes, der Küchengerätebasis bzw. des Küchengeräts sowie deren Funktion.

Ferner betrifft die Erfindung eine Verwendung eines Zubereitungsmoduls mit den Merkmalen eines der beschriebenen Ausführungsbeispiele, insbesondere nach einem der Ansprüche 1 bis 11, auf einer Küchengerätebasis eines Küchengeräts, insbesondere nach einem der beschriebenen Ausführungsbeispiele, vorzugsweise nach einem der Ansprüche 14 oder 15.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Küchengeräts mit einem Zubereitungsmodul und einer Küchengerätebasis in perspektivischer Ansicht,
- Fig. 2: ein Ausführungsbeispiel eines Gehäuses für ein Zubereitungsmodul in Schnittansicht im unteren Bereich,
- Fig. 3: das Ausführungsbeispiel gemäß Fig. 2 in einer teilweisen Draufsicht,
- Fig. 4a, 4b: ein Ausführungsbeispiel eines Verriegelungsrings in unterschiedlichen Ansichten,
- Fig. 5: ein Ausführungsbeispiel eines Topffußes eines Innentopfes in perspektivischer Ansicht von unten,
- Fig. 6: ein weiteres Ausführungsbeispiel eines Zubereitungsmoduls von der Unterseite,
- Fig. 7: ein Ausführungsbeispiel eines Aufnahmebereichs einer Küchengerätebasis in einer ersten Position,
- Fig. 8: das Ausführungsbeispiel eines Aufnahmebereichs gemäß Fig. 7 einer Küchengerätebasis in einer zweiten Position,
- Fig. 9: ein weiteres Ausführungsbeispiel eines Zubereitungsmoduls in Explosionsdarstellung,
- Fig. 10a: einen Schnitt durch ein Zubereitungsmodul im Bereich eines Topfriegels,
- Fig. 10b: einen Schnitt durch ein Zubereitungsmodul im Bereich eines Gehäuseriegels, und
- Fig. 11: ein Ausführungsbeispiel eines teilweise dargestellten Zubereitungsmoduls auf einer Küchengerätebasis.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

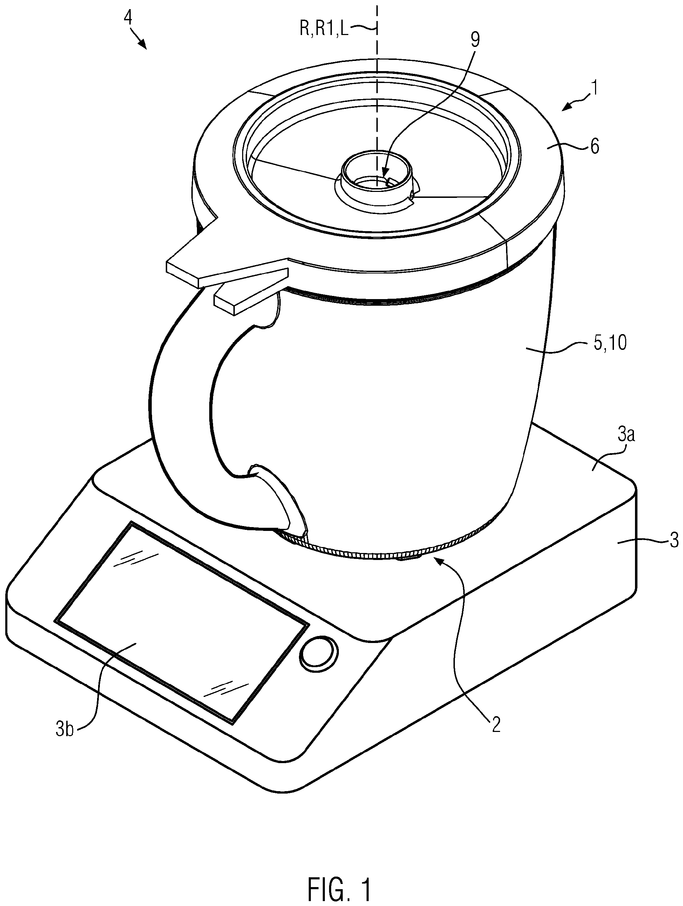

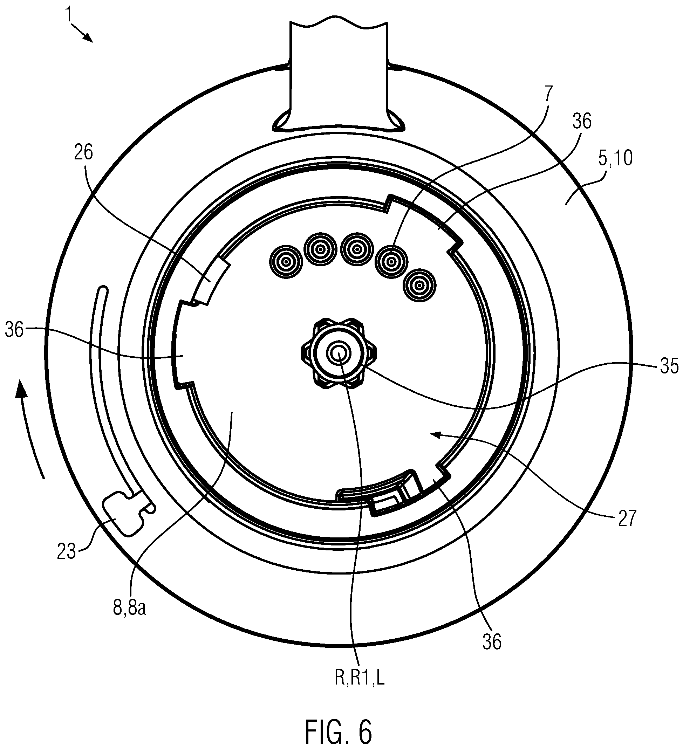

Fig. 1 zeigt ein Ausführungsbeispiel eines Küchengeräts 4 mit einem Zubereitungsmodul 1, das in einem Aufnahmebereich 2 einer Küchengerätebasis 3 angeordnet ist. Das Zubereitungsmodul 1 umfasst bei diesem Ausführungsbeispiel ein Zubereitungsgefäß 5 und einen Deckel 6. An einer Unterseite des Zubereitungsmoduls 1 ist eine elektrische Schnittstelle 7 (siehe beispielsweise Fig. 6) ausgebildet. Das Zubereitungsgefäß 1 ist auf eine flache Oberseite 3a der Küchengerätebasis 3 aufstellbar, um mit der Küchengerätebasis 3 zusammenzuwirken. Die Küchengerätebasis 3 weist mindestens eine kombinierte Anzeige- und Eingabevorrichtung 3b in Form eines Touchscreens auf, um Funktionen des Küchengeräts 4 zu steuern. Zusätzlich kann eine weitere elektromechanische Eingabevorrichtung in Form eines Drehschalters vorhanden sein.

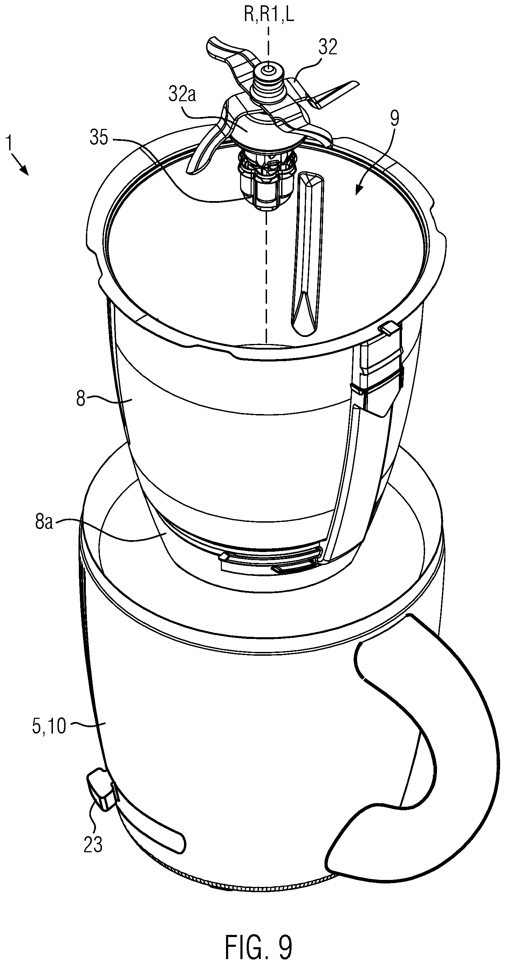

Das Zubereitungsgefäß 1 weist mindestens einen Innentopf 8 (siehe beispielsweise Fig. 9) mit einem Zubereitungsraum 9 und mindestens ein Gehäuse 10 auf. Das Gehäuse 10 ist derart ausgebildet, dass es den Innentopf 8 vollständig umgibt, wenn der Innentopf 8 in das Gehäuse 10 eingebracht ist. Der Innentopf 8 ist in dem Gehäuse 10 lösbar verriegelbar.

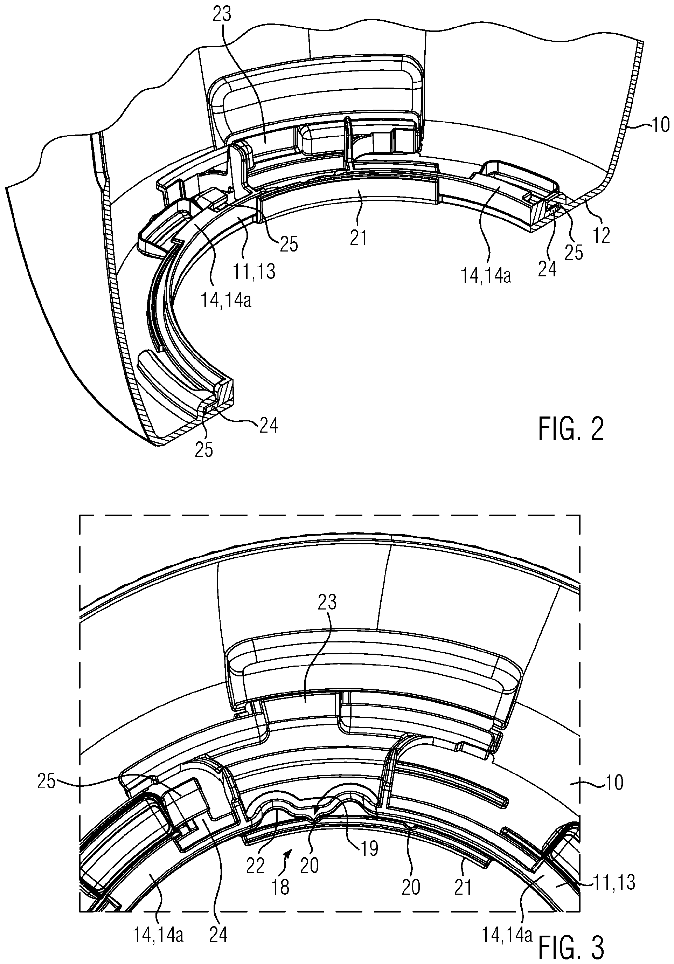

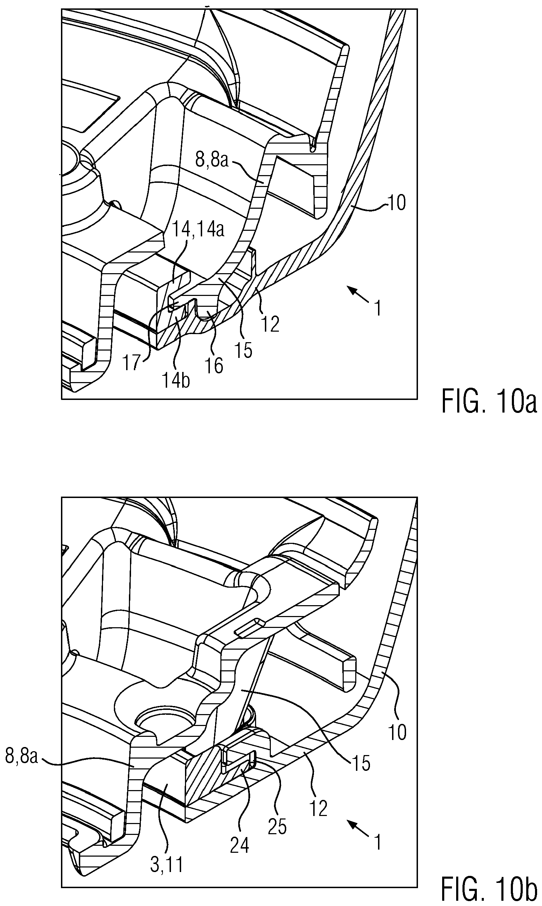

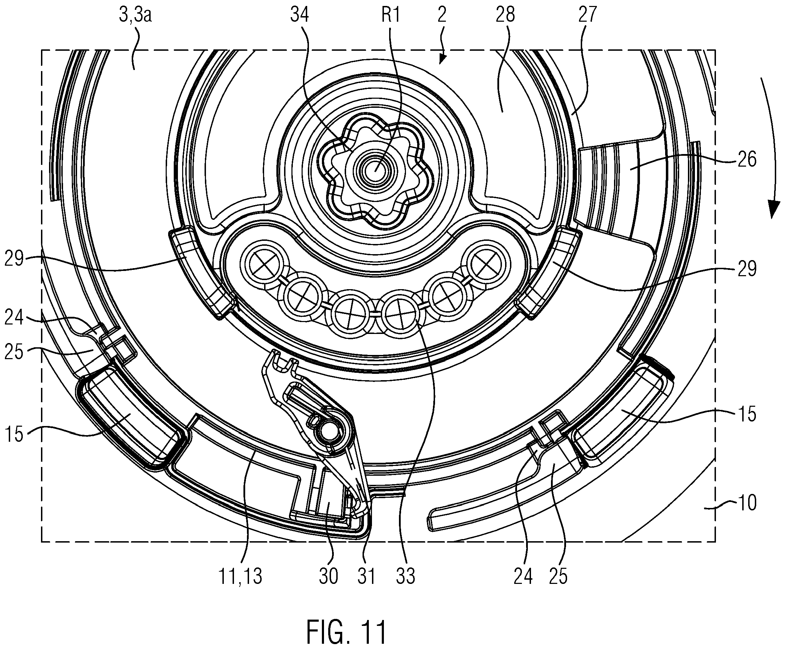

Fig. 2 zeigt einen Schnitt durch ein Gehäuse 10 des Zubereitungsmoduls 1 gemäß Fig. 1, in dessen unteren Bodenbereich eine Verriegelungseinheit 11 angeordnet ist, mit der zumindest der Innentopf 8 mit dem Gehäuse 10 lösbar verriegelbar ist. Das Gehäuse 10 weist in dem unteren Bodenbereich einen im Wesentlichen waagerecht verlaufenden Rand 12 auf, an dem ein Verriegelungsring 13 der Verriegelungseinheit 11 um eine Rotationsachse R rotierbar zwischen einer Freigabeposition, z. B. gemäß Fig. 3, und einer Verriegelungsposition, z. B. gemäß Fig. 10a, 10b und 11, gehalten ist. Der Verriegelungsring 13 ist zur Montage elastisch verformbar, so dass er durch eine elastische Verformung in das Gehäuse 10 eingesetzt und aus diesem, z. B. zur Reinigung, entnommen werden kann.

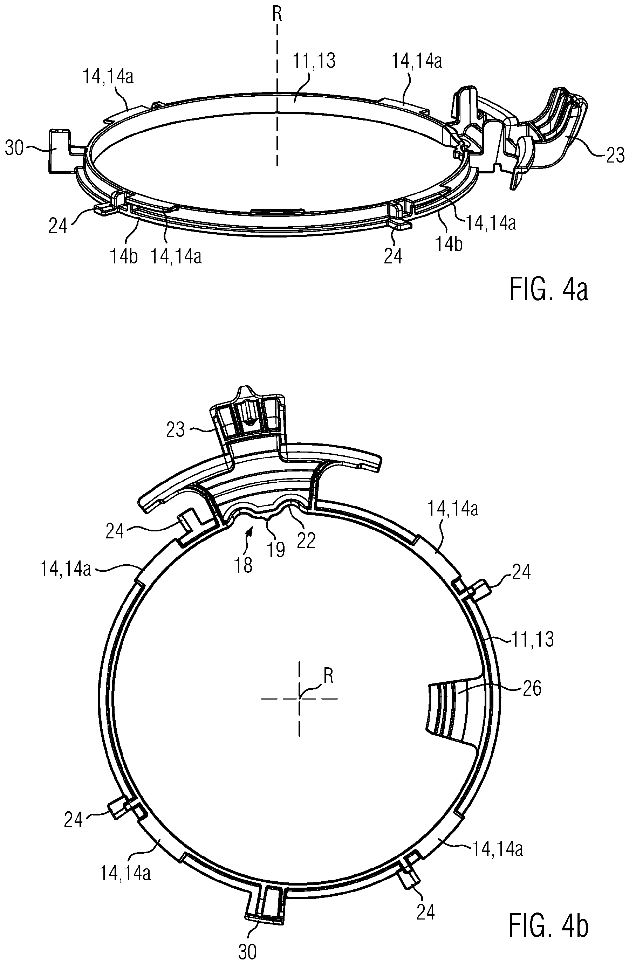

Der Verriegelungsring 13 ist in Fig. 4a und 4b separat in zwei verschiedenen Ansichten dargestellt. Fig. 4a zeigt eine perspektivische Ansicht, Fig. 4b eine Draufsicht. Der Verriegelungsring 13 der Verriegelungseinheit 11 weist vier auf dem Umfang des Verriegelungsrings 13 gleichmäßig verteilt angeordnete Topfriegel 14 auf, die in der Verriegelungsposition der Verriegelungseinheit 11 formschlüssig mit dem Innentopf 8 zusammenwirken. Die Topfriegel 14 weisen eine Dicke auf, die etwa der Dicke des Verriegelungsring 13 entspricht, und erstrecken sich in radialer Richtung nach außen von dem Verriegelungsring 13 weg. Jeder der Topfriegel 14 weist einen oberen Riegelabschnitt 14a und einen unteren Riegelabschnitt 14b auf. Der obere Riegelabschnitt 14a steht von dem Verriegelungsring 13 weiter hervor als der untere Riegelabschnitt 14b (siehe insbesondere Fig. 10a).

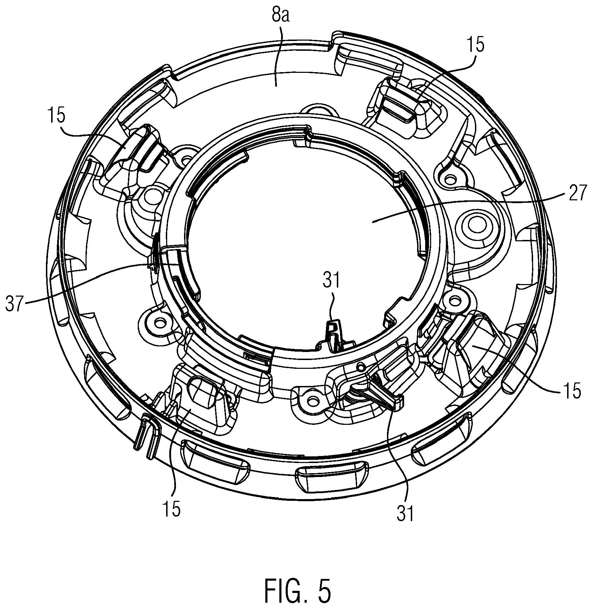

Fig. 10a zeigt einen Schnitt durch ein Zubereitungsmodul 1 im Bereich des Topfriegels 14 in der Verriegelungsposition. Der Topfriegel 14 umgreift mit seinem oberen Riegelabschnitt 14a und seinem unteren Riegelabschnitt 14b zumindest teilweise ein Gegenriegelelement 15, das an einem Topffuß 8a des Innentopfes 8 (siehe auch Fig. 5) ausgebildet ist. Dadurch wird der Innentopf 8 relativ zum Gehäuse 10 fixiert und mit dem Gehäuse 10 verriegelt, so dass der Innentopf 8 nicht mehr entnehmbar ist. Jedes Gegenriegelelement 15 ist gemäß Fig. 5 hakenförmig ausgebildet und steht von dem Topffuß 8a, insbesondere nach unten, hervor. Die Gegenriegelelemente 15 sind auf dem Umfang des Topffußes 8a gleichmäßig verteilt angeordnet.

Jedes Gegenriegelelement 15 weist einen radialen Führungsabschnitt 16 auf, der zum Zusammenwirken mit einem Rücksprung an dem Rand 12 ausgebildet ist, um den Innentopf 8 radial in dem Gehäuse 10 zu positionieren. Ferner ist an dem Gegenriegelelement 15 ein Riegelvorsprung 17 ausgebildet, der von dem oberen Riegelabschnitt 14a und dem unteren Riegelabschnitt 14b des Topfriegels 14 umgriffen wird. Würde der Innentopf 8 erst in das Gehäuse 10 eingebracht werden, wenn sich die Verriegelungseinheit 11 bereits in der Verriegelungsposition gemäß Fig. 10a befinden würde, kollidierte der Riegelvorsprung 17 mit dem oberen Riegelabschnitt 14a - mit dessen Oberseite, wodurch ein Einbringen des Innentopfes 8 in das Gehäuse 10 verhindert würde. Das gilt insbesondere für den Fall, in dem ein Gehäuse 10 ohne Innentopf 8 in einem Aufnahmebereich angeordnet würde.

Gemäß Fig. 4a und 4b weist der Verriegelungsring 13 zudem eine Rasteinheit 18 auf, die ebenfalls in Fig. 3 dargestellt ist. Mit der Rasteinheit 18 ist die Verriegelungseinheit 13 kraftformschlüssig in der Freigabeposition und in der Verriegelungsposition festlegbar. Fig. 3 zeigt den festgelegten Zustand in der Freigabeposition. Die Rasteinheit 18 weist eine federnd gelagerte Rastnocke 19 sowie zwei Rastrücksprünge 20 auf. Die Rastrücksprünge 20 sind an einem auf einem Innenumfang des Verriegelungsrings 13 hervorstehenden Steg 21 des Gehäuses 10 ausgebildet. Die Rastnocke 19 ist an einem zumindest teilweise gewölbten, hier insbesondere im Wesentlichen B-förmig gewölbten, Federelement 22 ausgebildet. Die Rastnocke 19 und das Federelement 22 sind einstückig mit dem Verriegelungsring 13 ausgebildet.

Gemäß Fig. 3 wirken die Rastnocken 19 und einer der Rastrücksprünge 20 in der Freigabeposition kraftformschlüssig zusammen. Wird ein Betätigungsgriff 23 von einem Benutzer betätigt, indem dieser den Betätigungsgriff gemäß Fig. 3 von links nach rechts überführt, wird, wenn die von einem Benutzer auf das Betätigungselement 23 aufgebrachte Kraft groß genug ist, die Rastnocke 19 unter Auslenkung des Federelementes 22 aus dem Rastrücksprung 20 heraustreten, so dass die Rastnocke 19 anschließend unter Wirkung des Federelementes 22 in den Rastrücksprung 20 in der Verriegelungsposition überführt wird und dort verrasten kann.

Der Verriegelungsring 13 der Verriegelungseinheit 11 weist gemäß Fig. 4a und Fig. 4b zudem vier Gehäuseriegel 24 auf, die zum formschlüssigen Zusammenwirken mit dem Gehäuse 10 zumindest in der Verriegelungsposition ausgebildet sind. Die Gehäuseriegel 24 sind auf dem Umfang des Verriegelungsrings 13 gleichmäßig zueinander verteilt und erstrecken sich in radialer Richtung nach außen von dem Verriegelungsring 13 weg.

Fig. 10b zeigt einen Schnitt durch ein Zubereitungsmodul 1 im Bereich eines Gehäuseriegels 24 in der Verriegelungsposition. Der Gehäuseriegel 24 befindet sich in der dargestellten Verriegelungsposition der Verriegelungseinheit 11 in einer Führungsnut 25 eines unteren Randes 12 des Gehäuses 10, in die er in der dargestellten Verriegelungsposition verschwenkt worden ist. Dadurch wird eine vorteilhafte Kraftübertragung zwischen Verriegelungsring 13 und Gehäuse 10 gewährleistet. Wie vorstehend beschrieben, kann der Verriegelungsring 13 durch elastische Verformung in die Führungsnuten 25 eingesetzt und aus diesen entnommen werden.

Fig. 9 zeigt ein Ausführungsbeispiel eines Zubereitungsgefäße 5 mit Gehäuse 10 und Innentopf 8 in Explosionsdarstellung. Der Innentopf 8 ist vollständig in das Gehäuse 10 einbringbar und mittels des Betätigungsgriffs 23 verriegelbar. Der Innentopf 8 weist einen - beispielsweise in Fig. 5 dargestellten - Topffuß 8a auf. In dem Innentopf 8 ist ein Werkzeughalter 32a lösbar verbindbar. An dem Werkzeughalter 32a ist ein Werkzeug 32 fest montiert. Der Werkzeughalter 32a weist eine mechanische Schnittstelle 35 auf. Der Betätigungsgriff 23 ist hier abweichend zu den Ausführungsbeispielen der Fig. 2, 3, 4a und 4b und ähnlich zu dem der Fig. 6 ausgebildet.

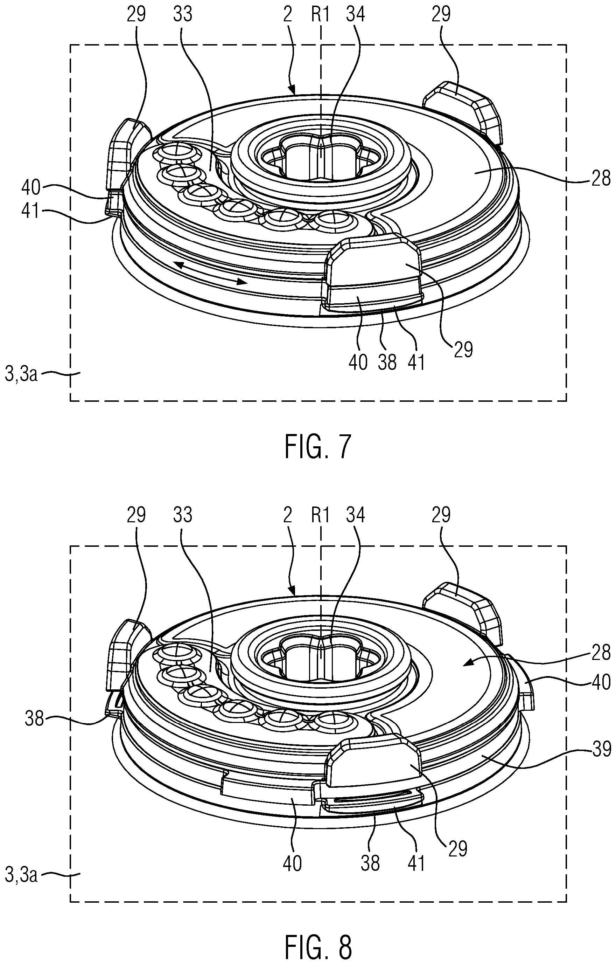

Der Verriegelungsring 13 weist gemäß Fig. 4b und Fig. 11 ferner ein Sperrelement 26 auf, das sich an dem Verriegelungsring 13 radial nach innen erstreckt. Das Sperrelement 26 ragt in eine Ausnehmung 27 hinein, die an dem Zubereitungsmodul 1 zur zumindest teilweisen Aufnahme einer Betätigungseinheit 28 (siehe Fig. 7 und 8) der Küchengerätebasis 3 ausgebildet ist. Die Betätigungseinheit 28 im Aufnahmebereich 2 der Küchengerätebasis 3 steht gemäß Fig. 7 und Fig. 8 von der Oberseite 3a der Küchengerätebasis 3 hervor. Die Betätigungseinheit 28 ist im Wesentlichen kreisrund ausgebildet. Die Betätigungseinheit 28 weist drei Einführelemente 29 auf, die das Zubereitungsmodul 1 beim Aufbringen führen. Unterhalb von jedem Einführelement 29 ist ein Mitnehmerelement 40 eines Betätigungselements 39 sowie ein ortsfestes Halteelement 41 angeordnet. Im Aufnahmebereich 2 sind ferner eine elektrische Gegenschnittstelle 33 zum Zusammenwirken mit der elektrischen Schnittstelle 7 gemäß Fig. 6 sowie eine mechanische Gegenschnittstelle 34 zum Zusammenwirken mit einer mechanischen Schnittstelle 35 eines Werkzeughalters 32a für ein Werkzeug 32 angeordnet (siehe Fig. 9). Dadurch kann ein Drehmoment von der mechanischen Gegenschnittstelle 34 auf die mechanische Schnittstelle 35 übertragen werden. Die mechanische Gegenschnittstelle 34 ist um eine Rotationsachse R1 rotierbar. Diese fällt hier mit einer Längsachse L des Zubereitungsgefäßes 5 und der Rotationsachse R des Verriegelungsrings 13 zusammen (siehe Fig. 1 und 9).

Das Sperrelement 26 ist derart an dem Verriegelungsring 13 angeordnet, dass das Sperrelement 26, wenn sich der Verriegelungsring 13 in der Freigabeposition befindet, mit der Betätigungseinheit 28, insbesondere einem Einführelement 29, an der Küchengerätebasis 3 kollidiert und dadurch ein Anordnen des Zubereitungsmoduls 1 auf der Küchengerätebasis 3 verhindert. Ist die Verriegelungseinheit 11 gemäß Fig. 11 in der Verriegelungsposition angeordnet, ist das Sperrelement 26 seitlich neben dem Einführelement 29 positioniert, so dass das Zubereitungsmodul 1 im Aufnahmebereich 2 angeordnet werden kann.

Befindet sich die Verriegelungseinheit 11 - wie in Fig. 11 dargestellt - in der Verriegelungsposition, könnte sie gemäß Fig. 11 durch eine Rotation in Pfeilrichtung in die Freigabeposition verbracht werden. Das Zusammenwirken des Sperrelementes 26 und des Einführelementes 29 verhindert dabei allerdings das Verbringen der Verriegelungseinheit 11 in die Freigabeposition, wenn sich das Zubereitungsmodul 1 auf der Küchengerätebasis 3 befindet. Dadurch wird verhindert, dass ein Benutzer das Gehäuse 10 von dem Innentopf 8 lösen kann, wenn sich das Zubereitungsmodul 1 auf der Küchengerätebasis 3 befindet.

Fig. 5 zeigt ein Ausführungsbeispiel eines Topffußes 8a für einen Innentopf 8, z. B. gemäß Fig. 9. An dem Topffuß 8a ist ein Sperrhebel 31 angeordnet, der sich in seiner dargestellten Sperrposition ebenfalls in die Ausnehmung 27 zur Aufnahme der Betätigungseinheit 28 an dem Zubereitungsmodul 1 erstreckt. Der Sperrhebel 31 ist an dem Topffuß 8a rotierbar zwischen einer Sperrposition (Fig. 5) und einer Neutralposition (Fig. 11) gelagert. Die Gegenriegelelemente 15 stehen von dem Topffuß hervor.

Fig. 6 zeigt ein weiteres Ausführungsbeispiel eines Zubereitungsmoduls 1 von der Unterseite. An der Unterseite sind die elektrische Schnittstelle 7 und die mechanische Schnittstelle 35 zugänglich. Der Betätigungsgriff 23 ist hier unterschiedlich ausgestaltet als in den Ausführungsbeispielen der Fig. 2, 3, 4a und 4b.

Fig. 11 zeigt ein Ausführungsbeispiel eines teilweise dargestellten Zubereitungsmoduls 1, insbesondere eines Gehäuses 10 ohne Innentopf 8 und Topffuß 8a, im Aufnahmebereich 2 einer Küchengerätebasis 3. Fig. 11 zeigt eine Draufsicht auf den Aufnahmebereich 2 in dem Gehäuse 10. Der Topffuß 8a ist in Fig. 11 ausgeblendet, so dass der Sperrhebel 31 isoliert dargestellt ist, wodurch das Zusammenwirken des Sperrhebels 31 mit dem Verriegelungsring 13 erkennbar ist.

In der Sperrposition gemäß Fig. 5 überragt der Sperrhebel 31 im montierten Zustand des Topffußes 8a die elektrische Schnittstelle 32 des Innentopfes 8, so dass eine Anordnung des Zubereitungsmoduls 1 sowie eine elektrische Kontaktierung der elektrischen Schnittstelle 32 mit der elektrischen Gegenschnittstelle 33 (siehe Fig. 11) nicht möglich wäre. Der Sperrhebel 31 weist ein Rückstellmittel in Form einer Feder auf, die den Sperrhebel 31 stets in die Sperrposition gemäß Fig. 5 drängt.

Der Verriegelungsring 13 der Verriegelungseinheit 11 weist gemäß Fig. 4a, 4b und 11 einen Sperrhebelschieber 30 auf, der sich zumindest teilweise in radialer Richtung nach außen von dem Verriegelungsring 13 weg erstreckt, im Wesentlichen aber parallel auch zu einer Rotationsachse R des Verriegelungsrings 13, insbesondere gemäß Fig. 4 nach oben, hervorsteht. Der Sperrhebelschieber 30 des Verriegelungsrings 13 dient dem Zusammenwirken mit dem Sperrhebel 31 und ist derart ausgebildet, dass der Sperrhebel 31 in eine Neutralposition gemäß Fig. 11 verbracht wird, wenn sich der Verriegelungsring 13 in Richtung seiner Verriegelungsposition bewegt.

In Fig. 11 befindet sich der Verriegelungsring 13 in der Verriegelungsposition und dadurch - unter Wirkung des Sperrhebelschiebers 30 - der Sperrhebel 31 in einer Neutralposition, in der er nicht mehr in die Ausnehmung 27 hineinragt, so dass die elektrische Schnittstelle 32 des Zubereitungsmoduls mit der elektrischen Gegenschnittstelle 33 der Küchengerätebasis 3 kontaktiert werden kann. Der Sperrhebel 31 verhindert, dass der Innentopf 8 von einem Benutzer ohne Gehäuse 10 auf der Küchengerätebasis 3 angeordnet wird.

Die Betätigungseinheit 28 steht gemäß Fig. 7 und 8 von der Oberseite 3a der Küchengerätebasis 3 hervor. Dadurch dringt die Betätigungseinheit 28 zumindest teilweise in die Ausnehmung 27 ein, wenn das Zubereitungsgefäß 5 auf der Küchengerätebasis 3 angeordnet wird. Stünde der Sperrhebel 31 in der Sperrposition, würde er mit der Betätigungseinheit 28 kollidieren.

Gemäß Fig. 7, 8 und 11 sind - wie vorstehend bereits beschrieben - unterhalb der Einführelemente 29 jeweils ein Mitnehmerelement 40 eines Betätigungselements 39 und ein ortsfestes Halteelement 41 angeordnet. Wird das Zubereitungsmodul 1 in einem Aufnahmebereich 2 angeordnet, dringen die Einführelemente 29 durch Ausnehmungen 36 in den Topffuß 8a ein (siehe Fig. 6). An dem Topffuß 8a ist ein Gegenelement 37 ebenfalls um die Rotationsachse R rotierbar gelagert. Das Betätigungselement 39 ist von einer Steuereinheit der Küchengerätebasis 3 zwischen einer ersten Position, in der das Zubereitungsmodul 1 aufgebracht werden kann (siehe Fig. 7), und einer zweiten Position, in der das Zubereitungsmodul 1 mit der Küchengerätebasis 3 verriegelt ist (siehe Fig. 8) rotierbar (siehe Doppelpfeil in Fig. 7). Bei einer Rotation des Betätigungselements 39 werden auch die Mitnehmerelemente 40 bewegt, die wiederum das Gegenelement 37 bewegen. Befinden sich die Mitnehmerelemente 40 in der zweiten Position gemäß Fig. 8, wirkt das Gegenelement 37 formschlüssig mit den ortsfesten Halteelementen 41 zusammen, indem das Gegenelement 38 zumindest teilweise unter die Halteelemente 41 rotiert wird. Das Gegenelement 37 wirkt dann vorzugsweise mit einer gewölbten Haltefläche 38 jedes Halteelements 41 zusammen. Dadurch ist das Zubereitungsgefäß 1 mit der Küchengerätebasis 3 verriegelt.

Alternativ dazu ist jedoch auch vorgesehen, dass das keine Verriegelung des Zubereitungsmoduls 1 erfolgt. Dann wird das Zubereitungsmodul 1 in dem Aufnahmebereich 2 nur aufgestellt und die Einführelemente 39 dringen in die Ausnehmung 28 bzw. in die Ausnehmungen 36 ein. Ein Gegenelement 37 am Zubereitungsmodul 1 ist dann nicht erforderlich.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Zubereitungsmodul
- 2: Aufnahmebereich
- 3: Küchengerätebasis
- 3a: Oberseite
- 3b: Anzeige-/Eingabevorrichtung
- 4: Küchengerät
- 5: Zubereitungsgefäß
- 6: Deckel
- 7: Elektrische Schnittstelle
- 8: Innentopf
- 8a: Topffuß
- 9: Zubereitungsraum
- 10: Gehäuse
- 11: Verriegelungseinheit
- 12: Rand
- 13: Verriegelungsring
- 14: Topfriegel
- 14a: Oberer Riegelrand
- 14b: Unterer Riegelrand
- 15: Gegenriegelelement
- 16: Führungsabschnitt
- 17: Riegelvorsprung
- 18: Rasteinheit
- 19: Rastnocke
- 20: Rastrücksprung
- 21: Steg
- 22: Federelement
- 23: Betätigungsgriff
- 24: Gehäuseriegel
- 25: Führungsnut
- 26: Sperrelement
- 27: Ausnehmung
- 28: Betätigungseinheit
- 29: Einführelement
- 30: Sperrhebelschieber
- 31: Sperrhebel
- 32: Werkzeug
- 32a: Werkzeughalter
- 33: Elektrische Schnittstelle von 3
- 34: Mechanische Gegenschnittstelle
- 35: Mechanische Schnittstelle
- 36: Ausnehmung
- 37: Gegenelement
- 38: Gewölbte Haltefläche
- 39: Betätigungselement
- 40: Mitnehmerelement
- 41: Halteelement

- R: Rotationsachse
- R1: Rotationsachse
- L: Längsachse

## Patentansprüche

1. Zubereitungsmodul (1) zum Anordnen in einem Aufnahmebereich (2) einer Küchengerätebasis (3) eines Küchengeräts (4), wobei das Zubereitungsmodul (1) mindestens ein Zubereitungsgefäß (5) und mindestens eine elektrische Schnittstelle (7) aufweist,
**dadurch gekennzeichnet, dass**
das Zubereitungsgefäß (5) mindestens einen Innentopf (8) und mindestens ein Gehäuse (10) aufweist, und dass der Innentopf (8) zumindest teilweise in dem Gehäuse (10) anordenbar und mit dem Gehäuse (10) lösbar verriegelbar ist.

2. Zubereitungsmodul (1) nach Anspruch 1,
**dadurch gekennzeichnet, dass**
in dem Gehäuse (10) mindestens eine Verriegelungseinheit (11) angeordnet ist, und dass mit der Verriegelungseinheit (11) zumindest der Innentopf (8) in dem Gehäuse (10) lösbar verriegelbar ist, insbesondere dass zumindest ein Teil der Verriegelungseinheit (11) zumindest zwischen einer Freigabeposition und einer Verriegelungsposition bewegbar, insbesondere rotierbar, ist.

3. Zubereitungsmodul (1) nach Anspruch 2,
**dadurch gekennzeichnet, dass**
die Verriegelungseinheit (11) mindestens einen Verriegelungsring (13) aufweist, insbesondere dass der Verriegelungsring (13) rotierbar in dem Gehäuse (10) gelagert ist.

4. Zubereitungsmodul (1) nach Anspruch 2 oder 3,
**dadurch gekennzeichnet, dass**
die Verriegelungseinheit (11) mindestens einen, bevorzugt mindestens vier, Topfriegel (14) aufweist, und dass der Topfriegel (14) zum formschlüssigen Zusammenwirken mit dem Innentopf (8) zumindest in der Verriegelungsposition ausgebildet ist, insbesondere dass der Topfriegel (14) in radialer Richtung nach außen von einem Verriegelungsring (13) der Verriegelungseinheit (11) hervorsteht.

5. Zubereitungsmodul (1) nach einem der Ansprüche 2 bis 4,
**dadurch gekennzeichnet, dass**
der Topfriegel (14) mindestens einen oberen Riegelabschnitt (14a) und mindestens einen unteren Riegelabschnitt (14b) aufweist, und dass der obere Riegelabschnitt (14a) von der Verriegelungseinheit (11) weiter hervorsteht als der untere Riegelabschnitt (14b).

6. Zubereitungsmodul (1) nach Anspruch 4 oder 5,
**dadurch gekennzeichnet, dass**
der Innentopf (8) mindestens ein Gegenriegelelement (15), insbesondere mindestens vier Gegenriegelelemente (15), zum formschlüssigen Zusammenwirken mit dem Topfriegel (14) in der Verriegelungsposition aufweist, insbesondere dass das Gegenriegelelement (15) hakenförmig ausgebildet ist, bevorzugt dass das Gegenriegelelement (15) an einem Topffuß (8a) des Innentopfes (8) ausgebildet ist.

7. Zubereitungsmodul (1) nach einem der Ansprüche 2 bis 6,
**dadurch gekennzeichnet, dass**
die Verriegelungseinheit (11) mindestens eine Rasteinheit (18) aufweist, und dass die Verriegelungseinheit (11) mit der Rasteinheit (18) kraftformschlüssig zumindest in der Freigabeposition und/oder in der Verriegelungsposition festlegbar ist.

8. Zubereitungsmodul (1) nach Anspruch 7,
**dadurch gekennzeichnet, dass**
die Rasteinheit (18) mindestens eine, insbesondere federnd gelagerte, Rastnocke (19) und mindestens zwei Rastrücksprünge (20) zum Zusammenwirken mit der Rastnocke (19) aufweist, insbesondere dass die Rastnocke (19) an einem zumindest teilweise gewölbten Federelement (22) ausgebildet ist.

9. Zubereitungsmodul (1) nach einem der Ansprüche 2 bis 8,
**dadurch gekennzeichnet, dass**
die Verriegelungseinheit (11) mindestens einen, insbesondere mindestens vier, Gehäuseriegel (24) aufweist, und dass der Gehäuseriegel (24) zum formschlüssigen Zusammenwirken mit dem Gehäuse (10) zumindest in der Verriegelungsposition ausgebildet ist, bevorzugt dass der Gehäuseriegel (24) in radialer Richtung nach außen von einem Verriegelungsring (13) der Verriegelungseinheit (11) hervorsteht.

10. Zubereitungsmodul (1) nach einem der Ansprüche 2 bis 9,
**dadurch gekennzeichnet, dass**
die Verriegelungseinheit (11) mindestens ein Sperrelement (26) aufweist, insbesondere dass das Sperrelement (26) in eine Ausnehmung (27) zur zumindest teilweisen Aufnahme einer Betätigungseinheit (28) einer Küchengerätebasis (3) hineinragt, bevorzugt dass das Sperrelement (26) von einem Verriegelungsring (13) der Verriegelungseinheit (11) radial nach innen hervorsteht.

11. Zubereitungsmodul (1) nach einem der Ansprüche 2 bis 10,
**dadurch gekennzeichnet, dass**
der Innentopf (8) mindestens einen bewegbar gelagerten Sperrhebel (31) aufweist, dass der Sperrhebel (31) durch ein Rückstellelement stets in eine Sperrposition gedrängt wird, und dass der Sperrhebel (31) in der Sperrposition in eine Ausnehmung (27) zur zumindest teilweisen Aufnahme einer Betätigungseinheit (28) einer Küchengerätebasis (3) hineinragt, insbesondere dass der Sperrhebel (31) von der Verriegelungseinheit (11), vorzugsweise mittels eines Sperrhebelschiebers (30), in eine Neutralposition verbringbar ist, wenn sich die Verriegelungseinheit (11) in Richtung der Verriegelungsposition bewegt, und dass der Sperrhebel (31) in der Neutralposition nicht mehr in die Ausnehmung (27) hineinragt.

12. Zubereitungsmodul (1) nach einem der Ansprüche 2 bis 10,
**dadurch gekennzeichnet, dass**
die Verriegelungseinheit (11) mindestens einen Sperrhebelschieber (30) aufweist, und dass der Sperrhebelschieber (30) zum Zusammenwirken mit einem am Innentopf (8) ausgebildeten Sperrhebel (31) ausgebildet ist, bevorzugt dass der Sperrhebelschieber (30) an einem Verriegelungsring (13) der Verriegelungseinheit (11) im Wesentlichen parallel zu einer Rotationsachse (R) des Verriegelungsrings (13) von dem Verriegelungsring (13) hervorsteht.

13. Gehäuse (10), insbesondere für ein Zubereitungsmodul (1) nach einem der Ansprüche 1 bis 12, wobei in dem Gehäuse (10) mindestens eine Verriegelungseinheit (11) mit mindestens einem Verriegelungsring (13) angeordnet ist, wobei der Verriegelungsring (13) relativ zum Gehäuse (10) zwischen einer Freigabeposition und einer Verriegelungsposition bewegbar ist, und wobei der Verriegelungsring (13) mindestens einen Gehäuseriegel (24), mindestens einen Topfriegel (14) und mindestens ein Sperrelement (31) aufweist.

14. Küchengerät (4), aufweisend mindestens eine Küchengerätebasis (3) und mindestens ein Zubereitungsmodul (1) nach einem der Ansprüche 1 bis 13,
**dadurch gekennzeichnet, dass**
die Küchengerätebasis (3) mindestens einen Aufnahmebereich (2) mit mindestens einer Betätigungseinheit (28) aufweist, und dass das Zubereitungsmodul (1) in dem Aufnahmebereich (2) anordenbar ist, insbesondere dass die Betätigungseinheit (11) zumindest teilweise in eine Ausnehmung (2) an dem Zubereitungsmodul (1) eindringt, wenn das Zubereitungsmodul (1) in dem Aufnahmebereich (2) angeordnet ist.

15. Küchengerät (4) nach Anspruch 14,
**dadurch gekennzeichnet, dass**
das Zubereitungsmodul (1) nicht im Aufnahmebereich (2) anordenbar ist, wenn sich die Verriegelungseinheit (11) in der Freigabeposition befindet, vorzugsweise dass mindestens ein Sperrelement (31) der Verriegelungseinheit (11) beim Einbringen in den Aufnahmebereich (2) mit einer Betätigungseinheit (28) der Küchengerätebasis (3) kollidiert, wenn sich die Verriegelungseinheit (11) in der Freigabeposition befindet und dadurch ein Einbringen verhindert wird und/oder vorzugsweise dass das Sperrelement (31) ein Verbringen der Verriegelungseinheit (11) in die Freihabeposition verhindert, wenn das Zubereitungsmodul (1) in dem Aufnahmebereich (2) angeordnet ist und sich die Verriegelungseinheit (11) in der Verriegelungsposition befindet, insbesondere indem das Sperrelement (31) formschlüssig mit einer Betätigungseinheit (28) der Küchengerätebasis (3) zusammenwirkt.
